# EUROPEAN PATENT SPECIFICATION

(11) **EP 1 757 420 B1**
(45) Date of publication and mention of the grant of the patent: **26.11.2014**
(21) Application number: 05743877.2
(22) Date of filing: 27.05.2005
(51) Int. Cl.: B29B 7/38, B29B 7/48, B29B 7/74, B29B 7/18

(54) **CONTINUOUS KNEADING METHOD**
KONTINUIERLICH ARBEITENDES KNETVERFAHREN
PROCÉDÉ DE PETRISSAGE CONTINU

(30) Priority: 03.06.2004 JP 2004165291
(43) Date of publication of application: 28.02.2007
(60) Divisional application: 14169161.8
(73) Proprietor: MITSUBISHI HEAVY INDUSTRIES, LTD., Tokyo 108-8215 (JP)
(72) Inventor: SHINTANI, Kouji, MITSUBISHI HEAVY INDUSTRIES, LTD., Nishi-ku Hiroshima-shi Hiroshima 7338553 (JP); MORIBE, Takashi, MITSUBISHI HEAVY INDUSTRIES, LTD., Nishi-ku Hiroshima-shi Hiroshima 7338553 (JP)
(74) Representative: Henkel, Breuer & Partner
(86) International application number: PCT/JP2005/009734
(87) International publication number: WO 2005/118242

(56) References cited:
- EP-A2- 0 160 124
- EP-A2- 0 213 510
- EP-A2- 1 013 402
- JP-A- 1 125 208
- JP-A- 6 210 627
- JP-A- 7 227 836
- JP-A- 9 239 726
- JP-A- 10 272 624
- JP-A- 58 024 406
- JP-A- 2000 043 032
- JP-A- 2001 205 625
- US-A- 2 485 854
- US-A- 5 487 602
- US-A1- 2002 093 118

## Description

### Technical Field

This invention relates to a continuous kneading method.

### Background Art

A batch kneader is mainly known as an apparatus for kneading a material to be kneaded, such as rubber. In kneading rubber, for example, rubber as a starting material and a compounding ingredient, etc. are charged into a batch kneader, and kneaded. If heat release due to a kneading action is excessive, deterioration of rubber quality is induced.

Thus, in a current kneading operation, the temperature of the material to be kneaded during kneading is monitored. At a time when this temperature rises to a predetermined temperature (about 150°C, for example, in the case of rubber) before the material to be kneaded is deteriorated, the material to be kneaded is discharged from the kneader. After the material to be kneaded is cooled, the material to be kneaded is charged into the kneader again. This procedure is repeated a suitable number of times.

This repeatedly performed kneading step is called a rekneading step. This step requires a lengthy time, and thus becomes a factor for decreasing the productivity of a product such as a tire. Hence, there is a demand for a kneading apparatus involving a small amount of heat release of the material to be kneaded, and yet having satisfactory kneading performance and satisfactory dispersing performance.

On the other hand, a technology described in Patent Document 1 shown below is concerned with a two-shaft kneading extruder which can continuously knead a material to be kneaded, such as resin or high viscosity rubber.

The two-shaft kneading extruder is a device which has ball screws and a plurality of elements fixed on the outer periphery of each of two rotating shafts, the elements having a disk-shaped rotor cross-section and being arranged in a zigzag manner. These ball screws and elements are rotated so as to engage each other in a tubular chamber, whereby the continuously fed material to be kneaded, such as rubber or resin, is transported and kneaded.

When kneading of rubber or the like is to be performed using this two-shaft kneading extruder, a material to be kneaded, which comprises rubber or comprises rubber and various compounding ingredients incorporated therein, is fed to a feed section of the two-shaft kneading extruder. In the feed section, the material to be kneaded is heated and extruded toward a kneading section located on a downstream side in the axial direction.

Then, in the kneading section, a shearing force is imparted by kneading disks to knead the material to be kneaded. The kneading disks each have a protruding blade portion on an outer surface thereof, and impart a strong shearing force to the material to be kneaded, in a gap or a so-called tip clearance defined between the tip of the blade portion and the inner wall of the chamber.

With a conventional general continuous kneader, the tip clearance is set to be very small. Thus, when a kneading operation is performed using this device, the heat release of the material to be kneaded is so great as to pose the problem of inducing deterioration of quality. The two-shaft kneading extruder described in Patent Document 1, on the other hand, produces an effect of suppressing heat release by forming a wide tip clearance and a narrow tip clearance to manipulate flow characteristics of the material to be kneaded within the chamber.

Patent Document 1: Japanese Patent Application Laid-Open No. 2003-245534

US 2002/00 93118 discloses a method according to the preamble of claim 1.

### Disclosure of the Invention

### Problems to be solved by the invention

With the above-described continuous kneading apparatus, however, the tip clearance is not sufficiently optimized and, thus, suppression of heat release of the material to be kneaded is insufficient. Alternatively, too wide a tip clearance is provided, potentially lowering kneading performance.

Generally, when the material to be kneaded is unevenly distributed within the chamber, it is difficult for the kneading disks to be uniformly held within the chamber. Thus, the inner wall surface of the chamber and the blade portions of the kneading disks make contact, causing wear or the like, and potentially presenting a problem such as a shortened apparatus life.

The present invention has been accomplished in the light of the above-described situations. It is an obj ect of the invention to provide a continuous kneading method which suppresses the heat release and deterioration of the material to be kneaded during kneading, while curtailing a decline in kneading performance, and further improves apparatus life.

### Means for Solving the Problems

A method according to the present invention, intended for solving the above problems, is a method according to claim 1, providing a continuous kneading apparatus.

The continuous kneading apparatus is a two-shaft kneading extruder.

The continuous kneading apparatus can have a structure in which the blade portions provided on the outer surfaces of the rotating shafts engage each other between the two shafts.

The continuous kneading apparatus can have a structure in which the blade portions engage each other between the two shafts over an entire length or a partial length of the rotating shafts.

The continuous kneading apparatus is kneading rubber or a rubber-based composition.

### Effects of the Invention

The method according to the present invention is a method according to claim 1. Thus, the heat release and deterioration of the material to be kneaded can be suppressed, without a great decline in the conventional kneading performance. Furthermore, the tip clearance h is rendered relatively large. Thus, even if the material to be kneaded is unevenly distributed in the chamber, and the kneading disks are uniformly held, with difficulty, in the chamber, wear upon contact between the inner wall surface of the chamber and the blade portions of the kneading disks can be prevented to lengthen the life of the apparatus.

Hence, the continuous kneading apparatus is a two-shaft kneading extruder. For a highly viscous material to be kneaded, such as rubber or a rubber-based composition, the continuous kneading apparatus can suppress heat release and quality deterioration further. Since the heat release of the material to be kneaded can be diminished, moreover, the cooling function can be simplified.

Furthermore, cost and manufacturing time can be rendered markedly advantageous,and productivity can be improved, compared with batch kneading which is a conventional general rubber kneading method.

### Brief Description of the Drawings

[Fig. 1] is a schematic sectional configurational drawing showing essential parts of a continuous kneading method according to a first embodiment of the present invention.
[Fig. 2] is a schematic inner plan view of a two-shaft kneading extruder which is the continuous kneading apparatus according to the first embodiment.
[Fig. 3] is a graph showing the relationship between h/D and a shearing force ratio, a heat release rate ratio in a kneading section of the continuous kneading apparatus according to the first embodiment.
[Fig. 4] is a schematic sectional configurational drawing showing essential parts of a continuous kneading apparatus according to a second embodiment, which is not part of the invention.
[Fig. 5] is a schematic inner plan view of a single-shaft kneading extruder which is a continuous kneading apparatus according to a third embodiment which is not part of the invention.
[Fig. 6] is a schematic configurational drawing showing a kneading system having a batch kneader applied to masterbatching, and a single two-shaft kneading extruder applied to rekneading and final kneading according to a fourth embodiment which is not part of the invention.
[Fig. 7] is a schematic configurational drawing showing a kneading system having a batch kneader applied to masterbatching, and a couple of two-shaft kneading extruders applied to rekneading and final kneading, respectively, according to a fifth embodiment which is not part of the invention.
[Fig. 8] is a schematic configurational drawing showing a kneading system having a batch kneader applied to masterbatching, a single two-shaft kneading extruder applied to rekneading and final kneading, and an undermixer and a cooler provided downstream of the batch kneader for performing rekneading, according to a sixth embodiment, which is not part of the invention.
[Fig. 9] is a schematic configurational drawing showing a kneading system which has a batch kneader applied to masterbatching, and a couple of two-shaft kneading extruders applied to rekneading and final kneading, respectively, and which performs rekneading by the two-shaft kneading extruder for rekneading, according to a seventh embodiment which is not part of the invention.

### Description of the Numerals and Symbols:

1 two-shaft kneading extruder, 2 barrel, 3 chamber, 4 screw set, 5 rotating shaft, 6 kneading disk, 7 blade portion, 9 cooling water channel, h tip clearance, D chamber inner diameter, 11 extruding section, 12 kneading section, 13 extruding section, 14 screw fin, 15 screw fin, 20 single-shaft kneading extruder, 21 barrel, 30 kneader, 31 undermixer, 32 two-shaft kneading extruder, 32a two-shaft kneading extruder, 32b two-shaft kneading extruder, 33 molding machine, 34 cooling device.

### <First embodiment>

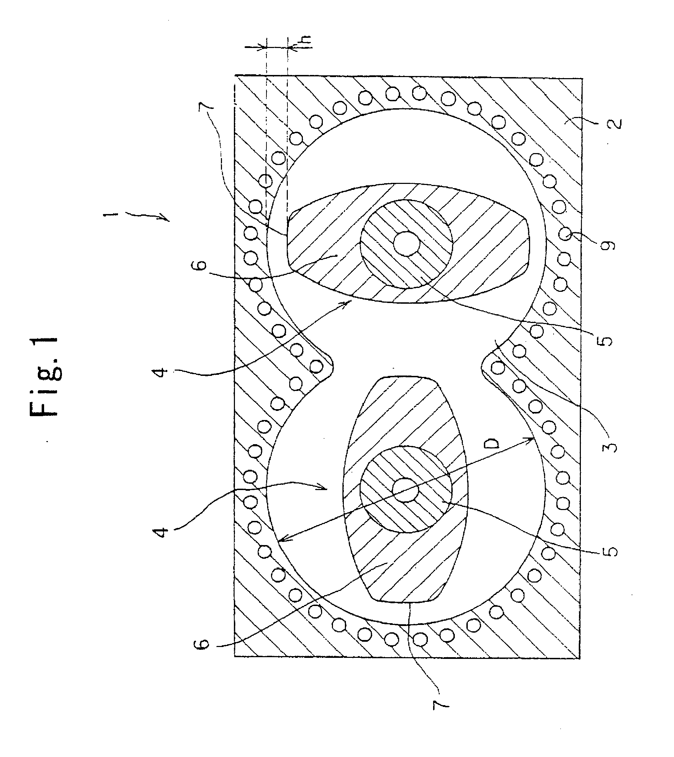

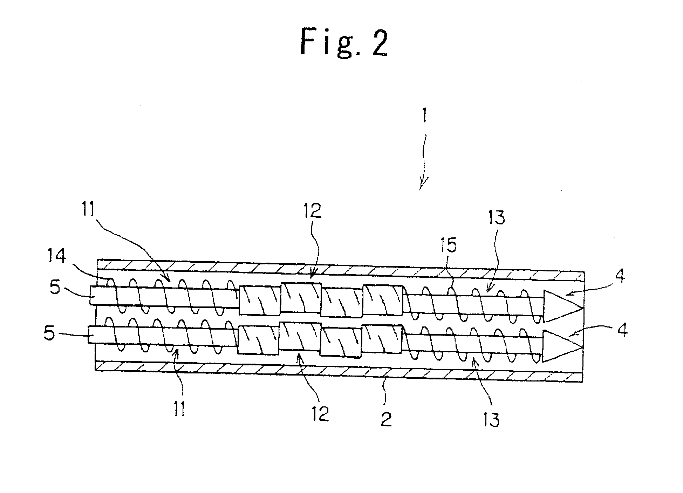

Embodiments will now be described for illustrative purposes based on the accompanying drawings. Fig. 1 is a schematic sectional configurational drawing showing essential parts of a continuous kneading apparatus according to a first embodiment. Fig. 2 is a schematic inner plan view of a two-shaft kneading extruder which is the continuous kneading apparatus according to the first embodiment.

As shown in Fig. 2, a two-shaft kneading extruder 1 according to the present embodiment has a pair of screw sets 4 parallel inside a barrel 2. Generally, a screw set is composed of a combination of a segment such as a kneading disk or a kneading disk, and a segment suchas a screw, orapluralityof such segments, disposed on the outer periphery of a rotating shaft.

Each of the screw sets 4 in the present embodiment is composed of an extruding section 11 (one end portion) having a screw fin 14 on the outer surface of a rotating shaft 5, a kneading section 12 (intermediate portion) having kneading blade portions on the outer surface of the rotating shaft 5, and an extruding section 13 (other end portion) having a screw fin 15 on the outer surface of the rotating shaft 5, as viewed from a side on which a material to be kneaded is fed.

In the two-shaft kneading extruder 1 shown in Fig. 2, the opposed screw fins 14 of the extruding sections 11 transport the material to be kneaded, which has been charged from a hopper (not shown), in a downstream direction for supply to the kneading sections 12. In the kneading sections 12, the material to be kneaded is kneaded by engagement between a plurality of the kneading blade portions provided on the outer surfaces of the rotating shafts 5, and by a shearing force generated between the tip of the kneading blade portion and the inner wall surface of the barrel 2. Then, in the extruding sections 12 located downstream of the kneading sections 12, the kneaded material is delivered by the opposed screw fins 15 to a next step.

Next, the kneading section 12, located in the intermediate zone of the two-shaft kneading extruder 1 shown in Fig. 2, will be described in detail based on Fig. 1 which is a sectional view of the extruder 1. As shown in Fig. 1, a pair of the screw sets 4 are disposed within a tubular chamber 3 (this chamber has a shape in which two tubes merge, because the extruder 1 is of a two-shaft type) formed within the barrel 2. The two screw sets 4 are arranged parallel, and rotated at an equal speed or different speeds in directions opposite to each other by a drive means (not shown) . The two screw sets 4 maybe rotated in the same direction.

The screw set 4 is composed of the rotating shaft 5, and a kneading disk 6 fitted around and fixed to the outer periphery of the rotating shaft 5 by a means such as a shrink fit. The kneading disk 6 comprises a central hole portion fitted about the rotating shaft 5, and a plurality of blade portions 7 provided on the outer surface of the hole portion.

The outer surface of the kneading disk 6 is subjected to a treatment, such as Cr plating, for enhanced wear resistance and corrosion resistance. Alternatively, after overlaying of stellite, treatment such as Cr plating may be applied to the outer surface. The kneading disk 6 may be integrally formed on the outer surface of the rotating shaft 5.

Next, the actions of the screw set 4 in the kneading section 12 will be described. The material to be kneaded, which has arrived at the chamber 3, starting rubber and compounding ingredients (carbon black, silica, oil, chemicals), is kneaded by the engaging action of the kneading disks 6 of the screw sets 4, and the shearing action produced between the kneading disks 6 and the inner wall surface of the chamber 3.

During kneading, a pressurized cooling medium, such as water, is flowed through cooling passages 9 provided in the barrel 2, and the same cooling medium is fed into the screw sets 4 to control heat release during kneading.

In the present embodiment, a tip clearance h, which is a gap defined between a portion of the kneading disk 6 closest to the inner wall surface of the chamber 3, namely, the tip of the blade portion 7 provided in the kneading disk 6, and the inner wall surface of the chamber 3, is set to be relatively large.

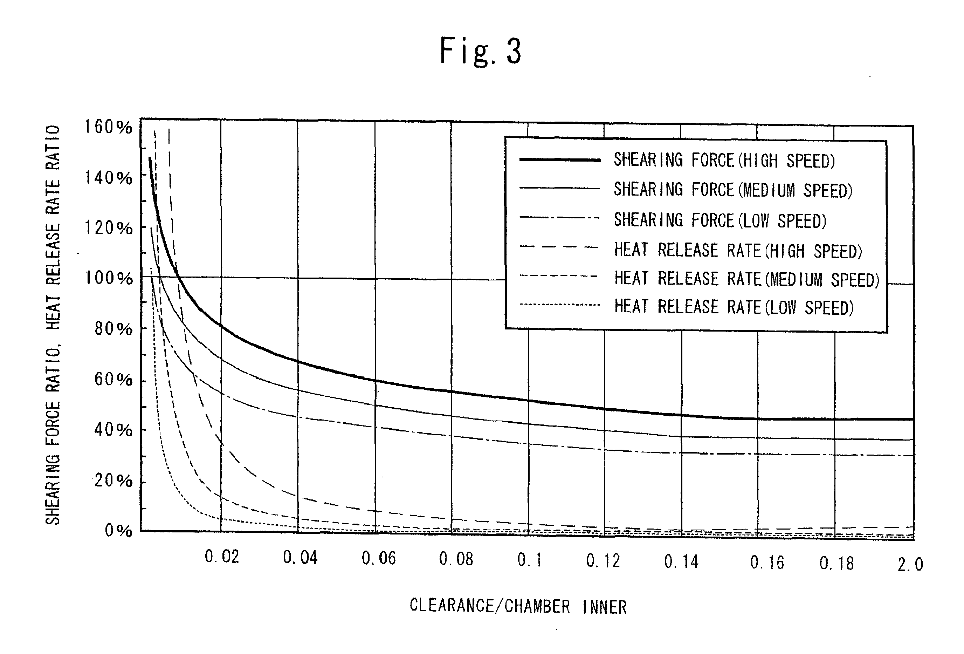

Fig. 3 is a graph showing the relationship between h/D and a shearing force ratio, a heat release rate ratio in the kneading section of the continuous kneading apparatus according to the present embodiment. This drawing shows this relationship found when the rotational speed of the kneading disk 6 is set in three stages, i.e. , a high speed, a medium speed, and a low speed. The symbol h is the size of the tip clearance, and D denotes the inner diameter of the chamber 3.

As experiments for deriving the relationship shown in the drawing, a conventional kneading apparatus (h/D of the kneading section = 0.002) was rotated at a low speed (50 rpm), and a shearing force τ₀ and a heat release rate Q₀ during kneading of the material to be kneaded were measured. Then, the tip clearance h was increased under the same conditions (low-speed rotation, material to be kneaded, inner diameter D), and changes in the shearing force τ_{L} and the heat release rate Q_{L} at increased h/D were examined. Also, changes in the shearing forces τ_{M}, τ_{H} and the heat release rates Q_{M}, Q_{H} during medium-speed rotation and high-speed rotation (200 rpm) were examined.

Based on these experiments, the ratios of the shearing force τ and the heat release rate Q to the shearing force τ₀ and the heat release rate Q₀ as references (i.e., τ/τ₀, Q/Q₀) were calculated, and the relationship between h/D and the shearing force ratio, and the heat release rate ratio in the kneading section of the kneading apparatus was shown in the graph.

As shown in the drawing, one will see that at any of the rotational speeds, as h/D increases, namely, as the tip clearance h increases, the shearing force τ and the heat release rate Q decrease. Also, comparisons between the decrease rates of the shearing force τ and those of the heat release rate Q show that as h/D increases, the shearing force gently decreases and becomes constant at about 50% (a shearing force which is a half of the conventional one), while the heat release rate sharply decreases, decreasing to about 10% or lower.

It is also seen that when a constant shearing force τ is to be maintained, the higher the rotational speed, the higher h/D has to be rendered. This is because with the same tip clearance, as the rotational speed increases, the shearing force becomes high, and the heat release rate increases, so that when the rotational speed is increased, h/D needs to be increased to decrease the shearing force and lower the heat release rate.

Based on the above findings, the heat release of the material to be kneaded can be suppressed by increasing h/D. However, the shearing force τ representing kneading performance is also decreased by increasing h/D.

In order to suppress the heat release of the material to be kneaded, therefore, h/D is set at 0.04 or higher. To curtail a decline in the kneading performance of the present embodiment, as compared with the kneading performance that the conventional kneading apparatus had, it is advisable to set h/D at 0.12 or lower, preferably 0.1 or lower, more preferably 0.08 or lower.

By setting h/D at a value in the above range, heat release can be suppressed markedly, with a decrease in the shearing force τ being kept small.

In the present embodiment, moreover, the tip clearance h is set to be relatively large. Thus, even if the material to be kneaded is unevenly distributed in the chamber 3, and the kneading disks 6 are minimally held uniformly in the chamber 3, wear due to contact between the inner wall surface of the chamber 3 and the blade portions 7 of the kneading disk 6 can be prevented, and the life of the apparatus can be lengthened.

In the present embodiment, an example of controlling the tip clearance in the kneading section 12 is shown. However, control is not limited to the kneading section 12, and similar control maybe effected for the screw fins 14 and 15 in the extruding sections 11 and 13.

### <Second embodiment>

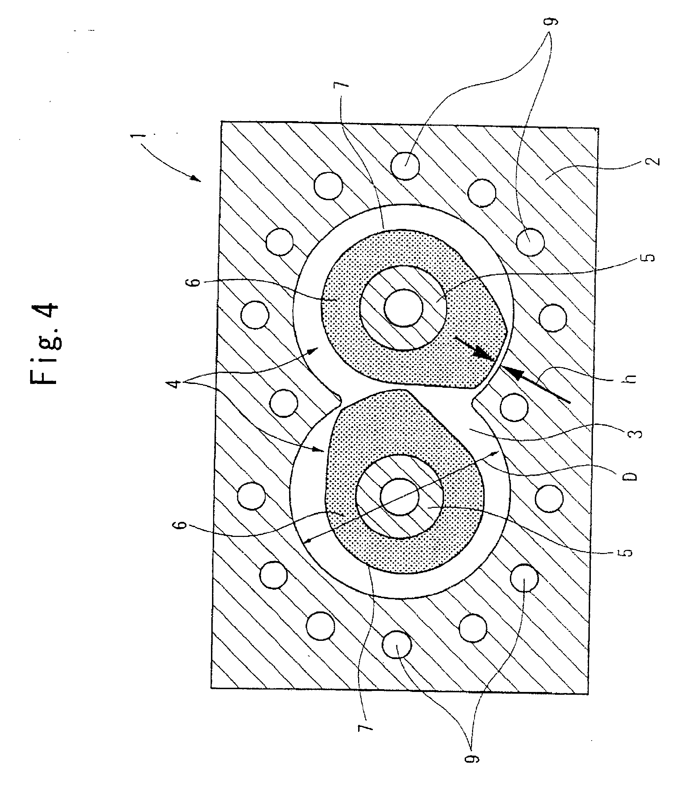

Fig. 4 is a schematic sectional configurational drawing showing essential parts of a continuous kneading apparatus according to a second embodiment.

The present embodiment is intended to improve kneading performance by disposing the kneading disks such that the blade portions 7 on the two shafts (rotating shafts 5, 5) in the first embodiment engage each other, namely, such that the loci of the two rotating blade portions overlap in a front view. Since other features are the same as those in the first embodiment, the same members and sites as those in Fig. 1 are assigned the same numerals and symbols as in Fig. 1, and duplicate explanations are omitted.

Preferably, the members are arranged such that engagement between the two shafts is performed not only at the blade portions 7 in the kneading sections 12, but also at the screw fins (blade portions in a broad sense) 14, 15 in the extruding sections 11, 13, namely, over the entire length of the rotating shafts 5, 5.

### Third Embodiment>

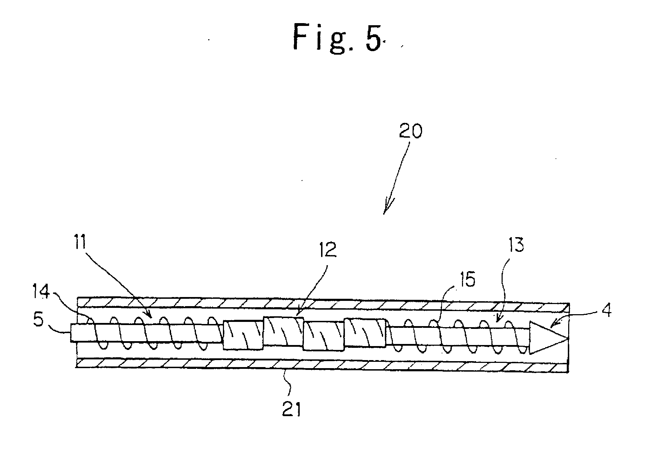

Fig. 5 is a schematic inner plan view of a single-shaft kneading extruder which is a continuous kneading apparatus according to a third embodiment. A shingle-shaft kneading extruder 20 shown in this drawing and the two-shaft kneading extruder 1 shown in Fig. 2 have comparable features, except that they are different in the number of the shafts and the associated shape of the tubular barrel 2. Thus, the corresponding features of both extruders are assigned common numerals.

In the kneading section 12 of this single-shaft kneading extruder 20, the material to be kneaded is kneaded by a shearing force produced between the tip portion (blade portion) of the kneading disk and the inner wall surface of a barrel 21. In the present embodiment as well, h/D in the range of the first embodiment is adopted, whereby heat release can be suppressed markedly, with a decrease in the shearing force being kept small. The life of the apparatus can also be prolonged.

In the present embodiment as well, control of the tip clearance may be exercised similarly for the screw fins 14, 15 in the extruding sections 11, 13.

### <Fourth Embodiment>

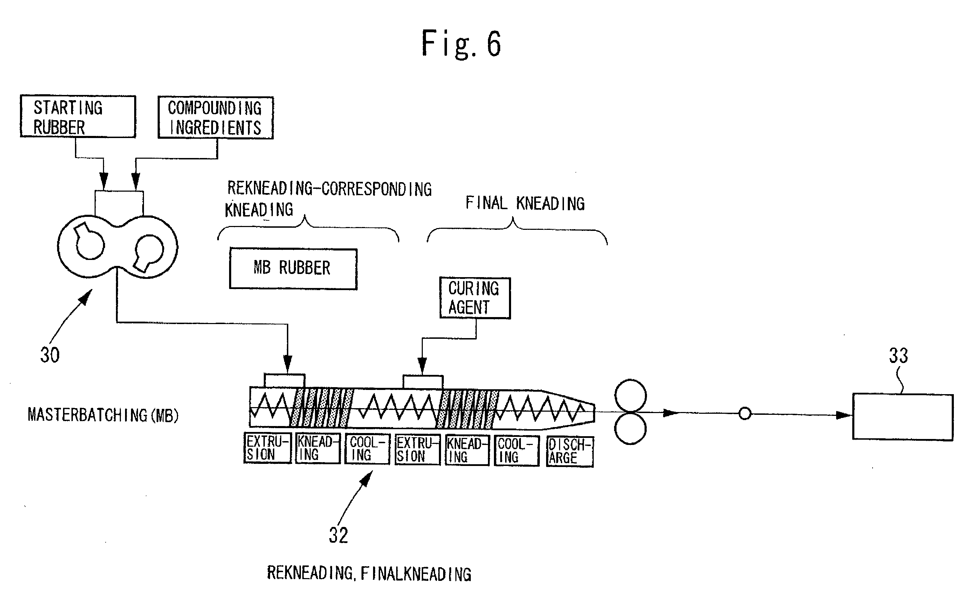

Fig. 6 is a schematic configurational drawing showing a kneading system having a batch kneader applied to masterbatching, and a single two-shaft kneading extruder applied to rekneading and final kneading according to a fourth embodiment. A two-shaft kneading extruder 32 shown in this drawing has two of the kneading sections of the continuous kneading apparatus according to the first embodiment, in which kneading corresponding to rekneading is performed in the first kneading section (upstream side), and kneading corresponding to final kneading is performed in the second kneading section (downstream side).

In this kneading system, starting rubber and compounding ingredients are kneaded (masterbatched) with the use of a batch kneader 30. In the batch kneader 30, the material to be kneaded is discharged at a time when BIT (black carbon incorporate time) that the rubber and compounding ingredients are integrated is reached.

The material to be kneaded, which has been discharged, is charged into the two-shaft kneading extruder 32, in whose upstream zone kneading corresponding to rekneading is carried out. In this kneading step, as shown in the first embodiment, the tip clearance h is increased, and h/D is set at a predetermined value. Thus, kneading can be performed with nearly comparable performance to the conventional kneading performance, with heat release of the material to be kneaded being suppressed markedly. Hence, there is no need to perform the rekneading stepmultiple times, and a single passage through the kneading section enables the procedure to proceed continuously into succeeding final kneading.

Then, a curing agent is added, whereafter kneading corresponding to final kneading is performed in the downstream zone of the two-shaft kneading extruder 32. In this kneading step as well, the above-mentioned effect is obtained; namely, kneading can be performed with nearly comparable performance to the conventional kneading performance, with heat release of the material to be kneaded being suppressed markedly. The rubber material withdrawn from the two-shaft kneading extruder 32 after completion of final kneading is molded by a molding machine 33, and used as a material for a rubber product, such as a tire.

A curing step for causing a curing reaction, for example, by heating the curing agent may be provided downstream of the molding machine 33. If the two-shaft kneading extruder 32 itself has a molding function, the molding machine 33 may be omitted.

As described above, according to this kneading system, the rekneading step can be completed if performed once. Thus, the procedure can proceed continuously into final kneading, so that the time requiring for work can be shortened, and productivity can be increased.

### <Fifth Embodiment>

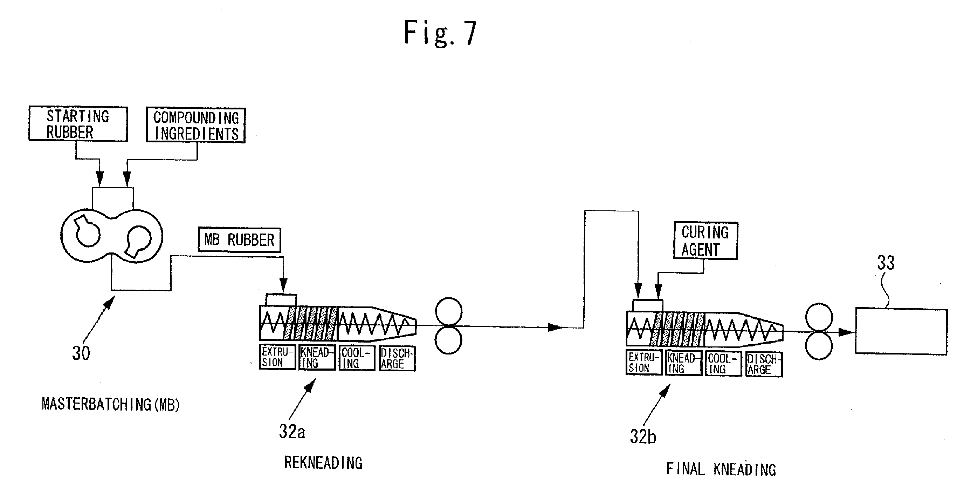

Fig. 7 is a schematic configurational drawing showing a kneading system having a batch kneader applied to masterbatching, and a couple of two-shaft kneading extruders applied to rekneading and final kneading, respectively, according to a fifth embodiment. A couple of two-shaft kneading extruders 32a, 32b shown in this drawing are the kneading apparatuses according to the first embodiment (see Figs. 1 and 2), in which rekneading is performed in the two-shaft kneading extruder 32a (upstream side), and final kneading is performed in the two-shaft kneading extruder 32b (downstream side).

In the kneading system according to the present embodiment, masterbatching is performed by a batch kneader 30. The material to be kneaded, after completion of masterbatching, is charged into the two-shaft kneading extruder 32a, where rekneading is carried out. In this rekneading step, as shown in the first embodiment, the tip clearance h is increased, and h/D is set at a predetermined value. Thus, kneading can be performed with nearly comparable performance to the conventional kneading performance, with heat release of the material to be kneaded being suppressed markedly. Hence, there is no need to perform the rekneading step multiple times, and a single passage through the two-shaft kneading extruder 32a enables the procedure to proceed continuously into succeeding final kneading.

Then, a curing agent is added, whereafter final kneading is performed in the two-shaft kneading extruder 32b. In this final kneading step as well, the above-mentioned effect is obtained; namely, kneading can be performed with nearly comparable performance to the conventional kneading performance, with heat release of the material to be kneaded being suppressed markedly. The rubber material withdrawn from the two-shaft kneading extruder 32b after completion of final kneading is molded by a molding machine 33, and used as a material for a rubber product, such as a tire.

In the present embodiment, the material to be kneaded is withdrawn once to the outside after rekneading. Thus, a plurality of final kneading lines may be designed, whereby the types and amounts of additives to be added can be changed, or a plurality of molded shapes can be designed, so that the range of applications can be widened.

### <Sixth Embodiment>

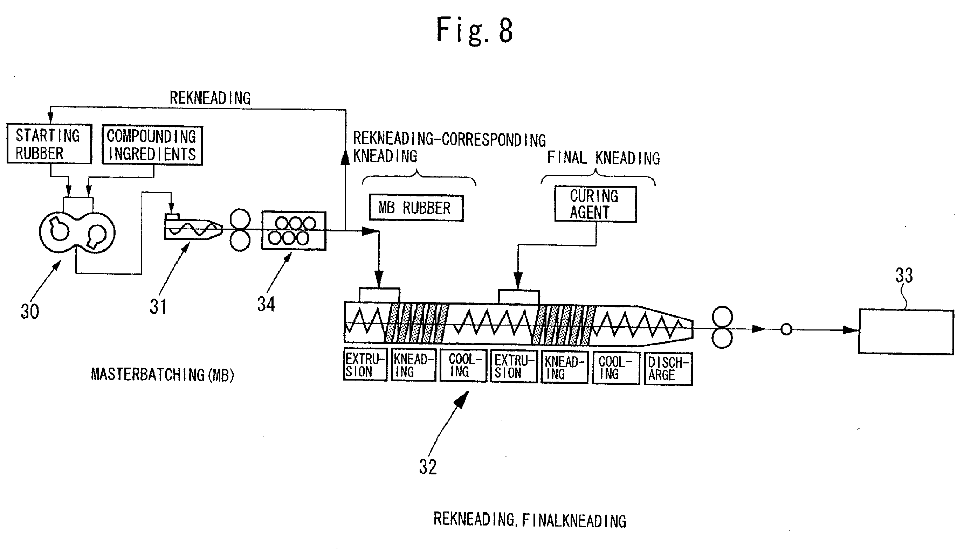

Fig. 8 is a schematic configurational drawing showing a kneading system having a batch kneader applied to masterbatching, a single two-shaft kneading extruder applied to rekneading and final kneading, and an undermixer and a cooler provided downstream of the batch kneader for performing rekneading, according to a sixth embodiment.

The kneading system according to the present embodiment is a modification of the kneading system according to the fourth embodiment, in which an undermixer 31 and a cooling device 34 are installed between the kneader 30 and the two-shaft kneading extruder 32.

In the present embodiment, the material to be kneaded, which has been withdrawn from the kneader 30, is formed into a sheet by the undermixer 31, and cooled by the cooling device 34. Then, this material is returned again to the kneader 30, where it is masterbatched. This rekneading step is performed once or a plurality of times. Then, the rekneaded material is charged into the two-shaft kneading extruder 32, and molded by the molding machine 33.

The kneading system according to the present embodiment is suitable for kneading in which the dispersion of compounding ingredients in the material to be kneaded, such as starting rubber, is difficult.

### <Seventh Embodiment>

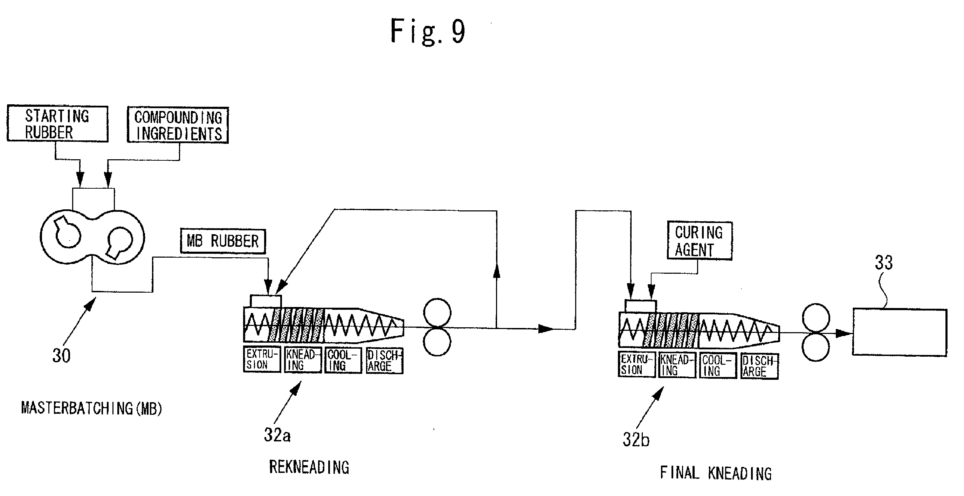

Fig. 9 is a schematic configurational drawing showing a kneading system which has a batch kneader applied to masterbatching, and a couple of two-shaft kneading extruders applied to rekneading and final kneading, respectively, and which performs rekneading by the two-shaft kneading extruder for rekneading, according to a seventh embodiment.

The kneading system according to the present embodiment is a modification of the kneading system according to the fifth embodiment. In the present embodiment, the material to be kneaded, which has been withdrawn from the two-shaft kneading extruder 32a, is returned again to the two-shaft kneading extruder 32a. In the fifth embodiment, the rekneading step in the two-shaft kneading extruder 32a is performed only once. In the present embodiment, on the other hand, the rekneading step is performed a plurality of times. Then, the rekneaded material is charged into the two-shaft kneading extruder 32b, and molded by the molding machine 33.

The rekneading step shown in Fig. 9 is performed by circulating the material to be kneaded, only through the two-shaft kneading extruder 32a. However, the rekneading step may be such that the material to be kneaded, which has been withdrawn from the two-shaft kneading extruder 32a, is returned to the kneader 30, and circulated through the two-shaft kneading extruder 32a and the kneader 30. Alternatively, the rekneading step may be such that the material to be kneaded is circulated only through the kneader 30, as shown in Fig. 8.

The kneading system according to the present embodiment is suitable for kneading in which the dispersion of compounding ingredients in the material to be kneaded, such as starting rubber, is difficult.

### Industrial Applicability

The continuous kneading apparatus, and the kneading system using it, can be applied not only to a material to be kneaded, which comprises rubber or comprises rubber and various compounding ingredients incorporated therein, but also to a material to be kneaded, which comprises resin or the like.

## Claims

1. A method of kneading rubber or a rubber-based composition, comprising:
providing a continuous kneading apparatus which is a two-shaft kneading extruder in which each shaft has a screw set (4) with a kneading section (12) that is furnished with kneading disks (6) each provided with a plurality of blade portions (7) on an outer surface of a rotating shaft (5), and is disposed in a barrel (2) having a tubular chamber (3); and
charging a starting rubber and compound ingredients into the chamber (3) of the continuous kneading apparatus and kneading the material;
**characterised in that**
a ratio h/D, where h is a clearance defined between the tip of each blade portion (7) and an inner wall surface of the chamber (3), and D is an inner diameter of the chamber (3), is 0.04 or higher.

2. The method of kneading rubber or a rubber-based composition according to claim 1, wherein the continuous kneading apparatus is a two-shaft kneading extruder in which the blade portions (7) provided on the outer surfaces of the rotating shafts (5) engage each other between the two shafts (5).

3. The method of kneading rubber or a rubber-based composition according to claim 2, wherein the continuous kneading apparatus has a structure in which the blade portions (7) engage each other between the two shafts (5) over an entire length or a partial length of the rotating shafts (5).

4. The method of kneading rubber or a rubber-based composition according to any one of claims 1 to 3, comprising:
kneading the starting rubber and compound ingredients in a kneader (30) for masterbatching before the masterbatched material is charged into the continuous kneading apparatus for further kneading.

5. The method of kneading rubber or a rubber-based composition according to claim 4, wherein
the kneading in the continuous kneading apparatus includes rekneading of the masterbatched material in a first continuous kneading apparatus (32a) provided downstream of the kneader (30), and
final kneading of the rekneaded material in a second continuous kneading apparatus (32b) provided downstream of the first continuous kneading apparatus (32a).

6. The method of kneading rubber or a rubber-based composition according to claim 4 or 5, comprising:
forming the material withdrawn from the kneader (30) for masterbatching into a sheet by an undermixer (31) and cooling it by a cooling device (34) provided downstream of the kneader (30); and
returning the material to the kneader (30) once or a plurality of times before the material is charged into the continuous kneading apparatus (32;32a,32b) provided downstream of the cooling device (34).

## Patentansprüche

1. Ein Verfahren zum Kneten von Gummi oder einer Gummibasierten Zusammensetzung, mit:
Vorsehen einer kontinuierlichen Knetvorrichtung, die ein Zwei-Wellen-Knetextruder ist, bei dem jede Welle einen Schneckensatz (4) mit einem Knetabschnitt (12) aufweist, der mit Knetscheiben (6) ausgestattet ist, die jeweils mit einer Vielzahl von Schaufelabschnitten (7) an einer Außenfläche einer Drehwelle (5) versehen sind, und in einer Trommel (2) mit einer rohrförmigen Kammer (3) angeordnet ist, und
Laden eines Ausgangsgummis und von Komponenteningredienzen in die Kammer (3) der kontinuierlichen Knetvorrichtung und Kneten des Materials,
**dadurch gekennzeichnet, dass**
ein Verhältnis h/D, wobei h ein Zwischenraum ist, welcher zwischen dem Außenende jedes Schaufelabschnitts (7) und einer Innenwandfläche der Kammer (3) definiert ist und D ein Innendurchmesser der Kammer (3) ist, 0,04 oder höher ist.

2. Das Verfahren zum Kneten von Gummi oder einer Gummibasierten Zusammensetzung gemäß Anspruch 1, wobei die kontinuierliche Knetvorrichtung ein Zwei-Wellen-Knetextruder ist, bei dem die Schaufelabschnitte (7), die an den Außenflächen der Drehwellen (5) vorgesehen sind, miteinander zwischen den zwei Wellen (5) in Eingriff sind.

3. Das Verfahren zum Kneten von Gummi oder einer Gummibasierten Zusammensetzung gemäß Anspruch 2, wobei die kontinuierliche Knetvorrichtung eine Struktur besitzt, bei der die Schaufelabschnitte (7) miteinander zwischen den zwei Wellen (5) über einer gesamten Länge oder einer Teillänge der Drehwellen (5) in Eingriff sind.

4. Das Verfahren zum Kneten von Gummi oder einer Gummibasierten Zusammensetzung gemäß einem der Ansprüche 1 bis 3, mit:
Kneten des Ausgangsgummis und von Komponenteningredienzen in einer Knetvorrichtung (3) zum Herstellen eines Vorgemischs, bevor das vorgemischte Material in die kontinuierliche Knetvorrichtung zum weiteren Kneten geladen wird.

5. Das Verfahren zum Kneten von Gummi oder einer Gummibasierten Zusammensetzung gemäß Anspruch 4, wobei
das Kneten in der kontinuierlichen Knetvorrichtung ein erneutes Kneten des vorgemischten Materials in einer ersten kontinuierlichen Knetvorrichtung (32a), die stromab der Knetvorrichtung (30) vorgesehen ist, und
finales Kneten des erneut gekneteten Materials in einer zweiten kontinuierlichen Knetvorrichtung (32b), die stromab der ersten kontinuierlichen Knetvorrichtung (32a) vorgesehen ist, aufweist.

6. Das Verfahren zum Kneten von Gummi oder einer Gummibasierten Zusammensetzung gemäß Anspruch 4 oder 5 mit:
Formen des von der Knetvorrichtung (30) zum Herstellen eines Vorgemischs abgezogenen Materials in eine Lage durch einen Untermischer (31) und Abkühlen derselben durch eine Kühlvorrichtung (34), die stromab der Knetvorrichtung (30) vorgesehen ist, und
Zurückführen des Materials zu der Knetvorrichtung (30) einmal oder mehrmals, bevor das Material in die kontinuierliche Knetvorrichtung (32;32a,32b) geladen wird, die stromab der Kühlvorrichtung (34) vorgesehen ist.

## Revendications

1. Procédé de malaxage de caoutchouc ou d'une composition à base de caoutchouc, comprenant :
la fourniture d'un appareil de malaxage en continu qui est une extrudeuse malaxeuse à deux arbres dans laquelle chaque arbre est doté d'un ensemble à vis (4) avec une section de malaxage (12) qui est équipée de disques de malaxage (6), chacun doté d'une pluralité de portions de lame (7) sur une surface externe d'un arbre rotatif (5), et est disposé dans un fût (2) doté d'une chambre tubulaire (3) ; et
le chargement d'un caoutchouc de départ et d'ingrédients de composé dans la chambre (3) de l'appareil de malaxage en continu et le malaxage du matériau ;
**caractérisé en ce**
**qu'**un rapport h/D, où h est un jeu défini entre le bout de chaque portion de lame (7) et une surface de paroi interne de la chambre (3), et D est un diamètre interne de la chambre (3), est de 0,04 ou plus.

2. Procédé de malaxage de caoutchouc ou d'une composition à base de caoutchouc selon la revendication 1, dans lequel l'appareil de malaxage en continu est une extrudeuse malaxeuse à deux arbres dans laquelle les portions de lame (7) agencées sur la surface externe des arbres rotatifs (5) s'enclenchent les unes avec les autres entre les deux arbres (5).

3. Procédé de malaxage de caoutchouc ou d'une composition à base de caoutchouc selon la revendication 2, dans lequel l'appareil de malaxage en continu a une structure dans laquelle les portions de lame (7) s'enclenchent les unes avec les autres entre les deux arbres (5) sur une longueur entière ou une longueur partielle des arbres rotatifs (5).

4. Procédé de malaxage de caoutchouc ou d'une composition à base de caoutchouc selon l'une quelconque des revendications 1 à 3, comprenant :
le malaxage du caoutchouc de départ et d'ingrédients de composé dans une malaxeuse (30) pour réaliser un mélange maître avant que le matériau de mélange maître soit chargé dans l'appareil de malaxage en continu pour continuer le malaxage.

5. Procédé de malaxage de caoutchouc ou d'une composition à base de caoutchouc selon la revendication 4, dans lequel
le malaxage dans l'appareil de malaxage en continu comprend le remalaxage du matériau de mélange maître dans un premier appareil de malaxage en continu (32a) agencé en aval de la malaxeuse (30), et
le malaxage final du matériau remalaxé dans un second appareil de malaxage en continu (32b) agencé en aval du premier appareil de malaxage en continu (32a).

6. Procédé de malaxage de caoutchouc ou d'une composition à base de caoutchouc selon la revendication 4 ou 5, comprenant :
la formation du matériau enlevé de la malaxeuse (30) pour réaliser un mélange maître en une feuille par un sous-mélangeur (31) et son refroidissement par un dispositif de refroidissement (34) agencé en aval de la malaxeuse (30) ; et
le renvoi du matériau à la malaxeuse (30) une fois ou plusieurs fois avant que le matériau soit chargé dans l'appareil de malaxage en continu (32 ; 32a, 32b) agencé en aval du dispositif de refroidissement (34).
